# EUROPEAN PATENT SPECIFICATION

(11) **EP 2 686 596 B1**
(45) Date of publication and mention of the grant of the patent: **13.12.2017**
(21) Application number: 12708347.5
(22) Date of filing: 14.03.2012
(51) Int. Cl.: F16L 13/14

(54) **FITTING WITH BUILT-IN INDICATOR RING**
VERBINDUNGSSTÜCK MIT INTEGRIERTEM INDIKATORRING
RACCORD AVEC BAGUE TÉMOIN INTÉGRÉE

(30) Priority: 14.03.2011 FR 1100781
(43) Date of publication of application: 22.01.2014
(73) Proprietor: Raccords et Plastiques Nicoll, 49309 Cholet (FR)
(72) Inventor: YVAI, Fabien, F-49300 Cholet (FR)
(74) Representative: Sonnenberg, Fred
(86) International application number: PCT/EP2012/054472
(87) International publication number: WO 2012/123501

(56) References cited:
- EP-A1- 1 267 113
- EP-A1- 1 722 146
- EP-A2- 1 174 653
- DE-U1-202005 009 453

## Description

The present invention relates to compression fittings, crimp fittings, or socket fittings, and more particularly, a ring for visually indicating insertion of the pipe to be connected. Compression fittings, crimp fittings, and socket fittings, by which pipes can be connected by compression and deformation using one or two sleeves, are well known in the field of tubing, piping, and conduit system installation, for example, for water, gas, or heating.
The tube, pipe or conduit systems are assembled in several steps: first, the tubes are inserted into a fitting; then, in the case of a crimp fitting, the fitting is crimped to guarantee good mechanical strength and a leak-tight installation. The crimping is essentially done by pressure on the fitting, which causes deformation or forming of the fitting to the pipe to which it is being connected. The pressure is usually applied to the fitting using a press jaw.
Installation or maintenance of a tubing, piping or conduit system requires the assembly of a plurality of tubes and fittings. It is critical that each connection in the installation be properly crimped to ensure the strength and leak-tightness of the entire system or installation. Otherwise, there can be serious safety problems, particularly in the case of gas piping systems.
It is sometimes difficult to ensure that all connections have been properly assembled and crimped. This may be due to working conditions (poor light, for example) or due to the repetition of steps during installation, which can adversely affect careful verification of each connection.
Document EP 1 722 146 discloses a fitting according to the preamble of claim 1 and a fitting according to the preamble of claim 5. Another known fitting is disclosed by the document EP1174653. Specifically, it is necessary to ensure that the tube is sufficiently inserted into the fitting, for example prior to crimping a crimp fitting. One goal of the present invention is to propose an indicator allowing the installer to check that the tube was properly inserted into the fitting.
To this end, the invention proposes a fitting according to claim 1 The fitting, includes: a fitting body with an end wall and an inner support on which a tube end can be inserted/fitted, a sleeve, which surrounds the inner support, to attach the tube end over the inner support, the sleeve including at least one window, an inner ring, pushed over the inner support, configured to be placed between the end wall and the tube end, the inner ring being able to move between a rest position and a abutment position in which the inner ring substantially bears against the end wall of the fitting body, and biasing means for biasing the inner ring to the rest position where the inner ring is visible through at least one window, with the means of restoration formed, at least in part, by a part other than the inner ring.

The inner support has a portion on the tube insertion end side with an outer circumferential envelope with a substantially constant diameter, and a portion on the end wall side with an outer circumferential envelope diameter that substantially increases in the direction of the end wall.

Advantageously, a junction area between the portion on the tube insertion end side and the portion on the end wall side substantially corresponds to the rest position P0.

The invention also proposes a fitting according to claim 5. The fitting, includes: a fitting body with an end wall and an inner support on which a tube end can be inserted/fitted, a sleeve, which surrounds the inner support, to attach the tube end over the inner support, the sleeve including at least one window, an inner ring, pushed over the inner support, configured to be placed between the end wall and the tube end, the inner ring being able to move between a rest position and a abutment position in which the inner ring substantially bears against the end wall of the fitting body, and biasing means for biasing the inner ring to the rest position where the inner ring is visible through at least one window, with the means of restoration formed, at least in part, by a part other than the inner ring. The inner ring includes at least one substantially flexible tabs bearing against the inner support. Preferably, the at least one said tab has a radial length that is substantially equal to the radial distance defined between the outer circumferential envelope of the portion on the tube insertion end side and the sleeve.

According to one embodiment, the sleeve has at least one axial window, in an axial position substantially corresponding to the rest position P0.

Advantageously, the inner ring, in the rest position, is in an axial position that is substantially aligned with an axial position of at least one window in the crimp sleeve.

According to one embodiment, the inner ring is substantially made of dielectric material.

Other characteristics and advantages of the invention will be clearer after reading the descriptions of several currently preferred embodiments, provided as examples only and referring to the attached drawings:
- Figure 1 schematically represents a fitting according to a first aspect of the present invention,
- Figure 2 shows a fitting sleeve according to a first aspect of the present invention,
- Figure 3 illustrates an inner ring for use on a fitting according to an aspect of the present invention.

In the figures, identical parts are identified with the same reference numbers.

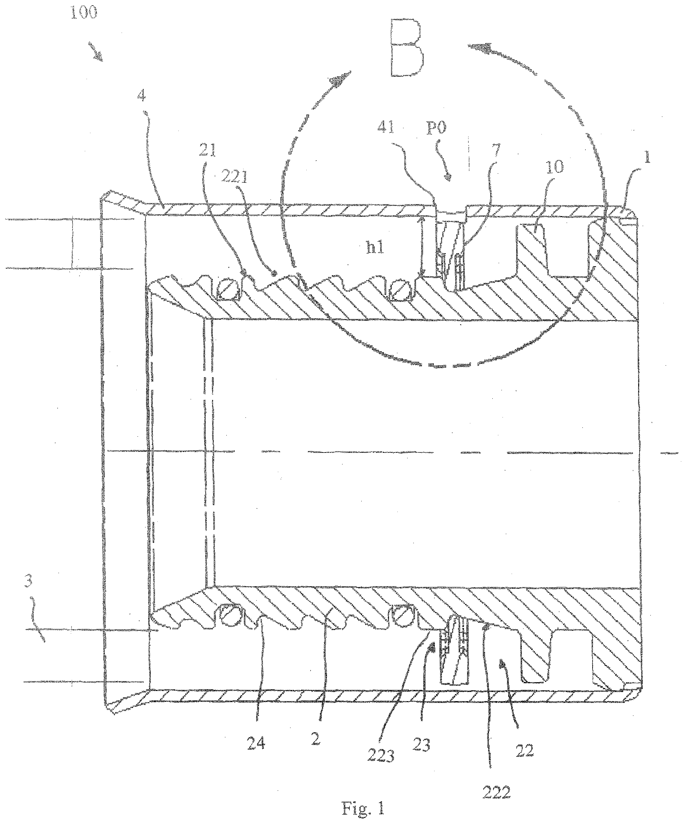

Figure 1 shows a fitting 100 allowing connection of a tube 3 according to one aspect of the present invention. The fitting 100 is a crimp fitting in the embodiment illustrated, as a nonlimiting example. A person skilled in the art will understand that other types of fittings are possible, such as compression or socket fittings.

The crimp fitting 100 includes a fitting body 1 including an end wall 10, an inner support 2 and a crimp sleeve 4 defining an insertion space 5 into which the tube end 3 can be inserted.

The crimp sleeve 4 extends substantially around the inner support 2 and can be irreversibly deformed, using pressure, to attach the inner support 2 and the tube end 3 to which it is connected. The pressure can be applied by a press jaw or a crimping tool (not shown).

The fitting body 1 has an elongated shape along a longitudinal axis, and can have a substantially symmetric shape with respect to its longitudinal axis.

The inner support 2 also has recesses 24, provided to accept a seal (not shown).

The inner support 2 has a portion 21 on the tube insertion end side with an outer circumferential envelope 221 with a substantially constant diameter from the tube insertion end to the junction area 23. The inner support 2 also has a portion 22 on the end wall side, with an outer circumferential envelope 222 with a substantially increasing diameter, from the junction area 23 to the end wall 10 of the fitting body 1.

An inner ring 7 is pushed or inserted over the inner support 2 on the side of the fitting. The inner ring 7 can be designed to create dielectric insulation between the tube 3 and the fitting.

The inner ring 7 is preferably made of a thermoplastic or equivalent material. The inner ring could also be made of metal.

The inner ring 7 is designed to visually indicate that the tube 3 was properly inserted into the insertion space. The inner ring 7 is also preferably of a contrasting colour, red for example, compared to the rest of the fitting and the sleeve, allowing the user to easily find and see it.

More specifically, the inner ring 7 is able to move between a rest position and an abutment position in which the inner ring 7 is substantially in abutment against the end wall 10 of the fitting body. The rest position P0 is one that is substantially axially aligned with an axial position of the junction area 23 between the portion 21 on the tube insertion end side and the portion 22 at the end wall.

The inner ring 7, in the rest position, is in an axial position with respect to at least one window 41 on the outer circumference of the sleeve 4. The window 41 is designed to allow visualization of the inner ring 7 when the tube 3 is not inserted or is only partly inserted into the crimp fitting 100. Alternatively, the window 41 could allow visualization of the inner ring 7 in the abutment position when the tube is inserted into the fitting, thus holding the ring in abutment against the end wall of the fitting.

In the rest position P0, the inner ring 7 bears against a circumferential wall 223 of the junction area 23 of the inner support 2, defining the portion 21 on the tube insertion end side with an outer circumferential envelope 221 with a substantially constant diameter.

When the tube 3 is pushed over the inner support 2 of the crimp fitting, the tube 3 pushes the inner ring 7, which then bears against the end wall 10 of the fitting body.

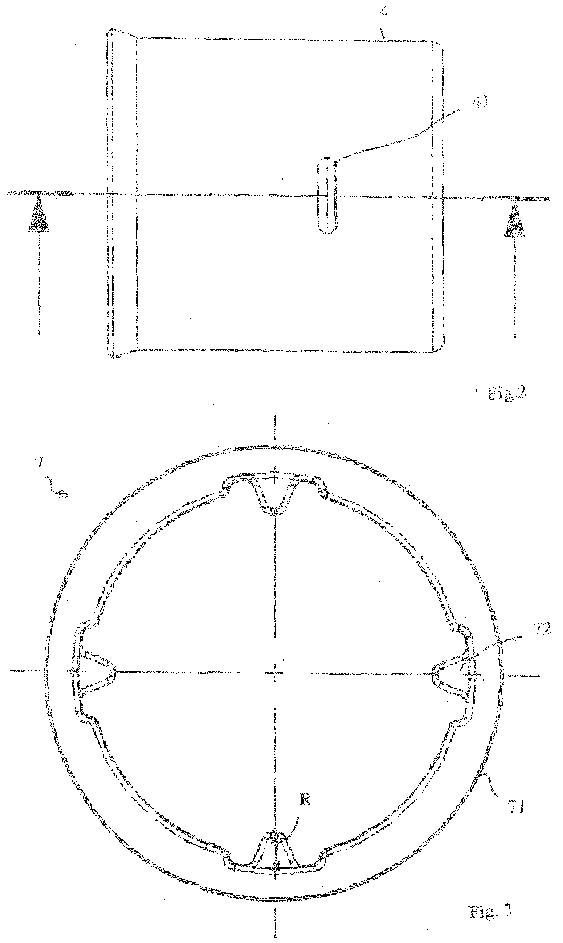

The inner ring 7 as shown in Figure 3 has an annular body 71 with four tabs 72. The annular body 71 has a diameter that substantially matches the inner diameter of the sleeve 4, for both good dielectric insulation and good visualization through the at least one window 41 in the sleeve 4. The tabs 72 have a radial length R that is substantially equal to the radial distance h1 defined between the outer circumferential envelope 221 of the inner support 2 and the sleeve 4 in the junction area 23.

The tabs 72 are configured to bear against the outer circumferential surface of the inner support 2. In the rest position P0, the tabs 72 bear against the junction area 23. The tabs 72 are substantially elastic.

Thus during crimping the tube 3 is pushed over the inner support 2 until it makes contact with the inner ring 7. When insertion of the tube continues and the tube 3 is inserted further along the longitudinal axis, the inner ring 7 is pushed along until it is in abutment against the end wall 10 of the fitting body.

A person skilled in the art will understand that the inner ring 7 is designed to be held against the end wall 10 by the tube 3. If the tube is inserted improperly or incompletely, or if it slips out, the tube 3 no longer holds the inner ring 7 against the end wall 10. As a result, the inner ring 7 is restored to the rest position P0 by the cooperation of the tabs bearing against the flared surface of the inner support.

The portion 22 on the end wall side has an outer circumferential envelope 222 with a diameter that substantially decreases from the end wall 10 of the fitting body towards the junction area 23 of the inner support 2. In other words, the height of the insertion space defined between the sleeve 4 and the inner support 2 in the portion 22 on the end wall side is greater than the length of the tabs 72; this causes the ring to return to a position P0, where the radial distance between the sleeve 4 and the inner support 2 substantially corresponds to the length of the tabs R.

Thus the cooperation between the tabs 72 of the inner ring and the flared external circumferential surface of the inner support 2 constitutes biasing means whereby the inner ring 7 returns to its rest position P0. The term 'biasing' in the present application should be understood as retracting, soliciting, spring, or the like. In the rest position, the inner ring is visible through at least one window 41 of the crimp sleeve, thus indicating whether or not the tube 3 is inserted properly and completely into the fitting.

A person skilled in the art will understand that the inner ring is shown with four tabs. The number of tabs is only provided as an example and is not limiting.

In the embodiment shown, the window 41 in the sleeve is designed to allow visualization of the inner ring 7 when the tube 3 is not inserted or is partially inserted into the crimp fitting 100, i.e., when the inner ring 7 is restored in the rest position. The window 41 in the sleeve could also be designed to allow visualization of the inner ring 7 when the inner ring is in abutment against the end wall, held by the tube 3 that is properly inserted into the fitting.

In summary, the fact remains to that the invention provides a crimped-, compression- or socket-type fitting with a sleeve equipped with an inner ring. The ring is configured to visually indicate that the tube is properly inserted. The inner ring is configured to return to the rest position, where it is visible when the tube is not inserted or is partially inserted into the crimp fitting. This advantageously ensures proper mating of the tube into the fitting for correct installation and good fitting strength.

## Claims

1. Fitting, including:
a fitting body (1) with an end wall (10) and an inner support (2) over which a tube end (3) can be inserted/fitted,
a sleeve (4) which surrounds the inner support (2), for attaching the tube end to the inner support, the sleeve (4) including at least one window (41),
an inner ring (7), pushed over the inner support, configured to be positioned between the end wall (10) and the tube end (3), with the inner ring (7) being able to move between a rest position (P0) and an abutment position where the inner ring is substantially in abutment against the end wall of the fitting body, and
biasing means (72; 2) for biasing the inner ring towards to the rest position where the inner ring (7) is visible through at least one window (41), the biasing means being formed, at least in part, by a part other than the inner ring,
wherein the inner support (2) has a portion (21) on the tube insertion end side with an outer circumferential envelope (221) with a substantially constant diameter from the tube insertion end to a junction area, and a portion (22) on the end wall side with an outer circumferential envelope (222), **characterized by** said portion (22) on the end wall side with an outer circumferential envelope (222) with a substantially increasing diameter in the direction of the end wall, the diameter increasing from said junction area (23) to the end wall (10).

2. Fitting according to claim 1, wherein the junction area (23) between the portion (21) on the tube insertion end side and the portion (22) on the end wall side substantially corresponds to the rest position P0.

3. Fitting according to any one of claims 1 to 2, wherein the inner ring (7) includes at least one substantially elastic tab (72) bearing against the inner support (2).

4. Fitting according to claim 3, wherein said at least one tab (72) has a radial length substantially equal to the radial distance defined between the outer circumferential envelope (221) of the portion (22) on the tube insertion end side and the sleeve (4).

5. Fitting, including:
a fitting body (1) with an end wall (10) and an inner support (2) over which a tube end (3) can be inserted/fitted,
a sleeve (4) which surrounds the inner support (2), for attaching the tube end to the inner support, the sleeve (4) including at least one window (41),
an inner ring (7), pushed over the inner support, configured to be positioned between the end wall (10) and the tube end (3), with the inner ring (7) being able to move between a rest position (P0) and an abutment position where the inner ring is substantially in abutment against the end wall of the fitting body, and
biasing means (72; 2) for biasing the inner ring to the rest position where the inner ring (7) is visible through at least one window (41), the biasing means being formed, at least in part, by a part other than the inner ring,
wherein the inner support (2) has a portion (21) on the tube insertion end side with an outer circumferential envelope (221) with a substantially constant diameter, and a portion (22) on the end wall side with an outer circumferential envelope (222), **characterized by** said portion (22) on the end wall side with an outer circumferential envelope (222) with a substantially increasing diameter in the direction of the end wall, said portion with the outer circumferential envelope (222) with a substantially increasing diameter in the direction of the end wall forming a flared surface, and wherein the inner ring (7) includes at least one substantially elastic tab (72) bearing against the inner support (2), wherein said at least one tab (72) has a radial length substantially equal to the radial distance defined between the outer circumferential envelope (221) of the portion (22) on the tube insertion end side and the sleeve (4), the inner ring being restorable to the rest position by the cooperation of the tabs against the flared surface.

6. Fitting according to claim 5, wherein a junction area (23) between the portion (21) on the tube insertion end side and the portion (22) on the end wall side substantially corresponds to the rest position P0.

7. Fitting according to any one of the preceding claims, wherein the sleeve (4) has at least one axial window (41), at an axial position substantially corresponding to the rest position P0.

8. Fitting according to claim 7, wherein the inner ring (7), in the rest position, is in an axial position substantially aligned with an axial position of at least one window (41) in the crimp sleeve.

9. Fitting according to any of the preceding claims, wherein the inner ring (7) is substantially made of dielectric material.

## Patentansprüche

1. Fitting, umfassend:
einen Fitting-Körper (1) mit einer End-Wand (10) und einem inneren Träger (2), über den ein Rohrende (3) einsteckbar ist/gefittet werden kann,
eine den inneren Träger (2) umgebende Hülse (4) zur Befestigung des Rohrendes am inneren Träger, wobei die Hülse (4) mindestens ein Fenster (41) aufweist,
einen Innenring (7), der über den inneren Träger geschoben ist/wird, konfiguriert um zwischen der End- oder Stirn-Wand (10) und dem Rohrende (3) positioniert zu werden/sein,
wobei sich der Innenring (7) bewegen kann zwischen einer Ruheposition (P0) und einer Anschlagposition, in der der Innenring im Wesentlichen an der End- oder Stirn-Wand des Fitting-Körpers anliegt, und
Vorspannmittel (72; 2) zum Vorspannen des Innenrings in Richtung der Ruhestellung, wo der Innenring (5) durch mindestens ein Fenster (41) sichtbar ist, wobei die Vorspannmittel zumindest teilweise, durch ein anderes Teil/einen anderen Teil als den inneren Ring ausgebildet sind/werden, wobei
der innere Träger (2) aufweist einen Abschnitt (21) auf der Rohreinführungsendseite mit einer äußeren umlaufenden Erzeugenden (221) mit einem im wesentlichen konstanten Durchmesser von dem Rohreinführungsende hin zu einem Übergangs- oder Verbindungsbereich, und einen Abschnitt (22) an der End- oder Stirn-Wand-Seite mit einer äußeren umlaufenden Erzeugenden (222), **gekennzeichnet durch** den Abschnitt (22) an der End- oder Stirn-Wand-Seite mit einer äußeren umlaufenden Erzeugenden (222), mit einem in Richtung der End- oder Stirn-Wand im Wesentlichen zunehmenden Durchmesser, wobei der Durchmesser von dem Übergangs- oder Verbindungsbereich (23) zu der End- oder Stirn-Wand (10) zunimmt.

2. Fitting nach Anspruch 1, **dadurch gekennzeichnet, dass** der Übergangs- oder Verbindungsbereich (23) zwischen dem Abschnitt (21) auf der Rohreinführungsendseite und dem Abschnitt (22) auf der End- oder Stirn-Wandseite im Wesentlichen der Ruheposition P0 entspricht.

3. Fitting nach einem der Ansprüche 1 bis 2, **dadurch gekennzeichnet, dass** der Innenring (7) zumindest eine im wesentlichen elastische Lasche (72), die an dem inneren Träger (2) anliegt, umfasst.

4. Fitting nach Anspruch 3, **dadurch gekennzeichnet, dass** die mindestens eine Lasche (72) eine radiale Länge aufweist im Wesentlichen gleich zu dem radialen Abstand, der zwischen der äußeren Erzeugenden (221) des Abschnitts (22) auf der Rohreinführungsendseite und der Hülse (4) definiert ist.

5. Fitting, umfassend:
einen Fitting-Körper (1) mit einer End- oder Stirn-Wand (10) und einem inneren Träger (2),
über den ein Rohrende (3) einsteckbar ist/gefittet werden kann,
eine den inneren Träger (2) umgebende Hülse (4) zur Befestigung des Rohrendes am inneren Träger, wobei die Hülse (4) mindestens ein Fenster (41) aufweist,
einen Innenring (7), der über den inneren Träger geschoben ist/wird, konfiguriert um zwischen der End- oder Stirn-Wand (10) und dem Rohrende (3) positioniert zu werden/sein,
wobei sich der Innenring (7) bewegen kann zwischen einer Ruheposition (P0) und einer Anschlagposition, in der der Innenring im Wesentlichen an der End- oder Stirn-Wand des Fitting-Körpers anliegt, und
Vorspannmittel (72; 2) zum Vorspannen des Innenrings in Richtung der Ruheposition, wo der Innenring (7) durch mindestens ein Fenster (41) sichtbar ist, wobei die Vorspannmittel zumindest teilweise, durch ein anderes Teil/einen anderen Teil als den inneren Ring ausgebildet sind/werden, wobei
der innere Träger (2) aufweist einen Abschnitt (21) auf der Rohreinführungsendseite mit einer äußeren umlaufenden Erzeugenden (221) mit einem im wesentlichen konstanten Durchmesser von dem Rohreinführungsende hin zu einem Übergangs- oder Verbindungsbereich, und einen Abschnitt (22) an der End- oder Stirn-Wand-Seite,
**gekennzeichnet durch** den Abschnitt (22) an der End- oder Stirn-Wand-Seite mit einer äußeren umlaufenden Erzeugenden (222) mit einer äußeren umlaufenden Erzeugenden (222) mit einem in Richtung der End- oder Stirn-Wand im Wesentlichen zunehmenden Durchmesser,
wobei der Abschnitt mit der äußeren umlaufenden Erzeugenden, die den in Richtung der End-oder Stirn-Wand im Wesentlichen zunehmenden Durchmesser hat eine sich aufweitende Fläche ausbildet, und wobei die innere Ring (7) zumindest eine im wesentlichen elastische Lasche (72) aufweist, die an dem inneren Träger (2) anliegt, wobei die mindestens eine Lasche (72) eine radiale Länge aufweist, die im Wesentlichen gleich dem radialen Abstand ist, der zwischen der äußeren umlaufenden Erzeugenden (221)) des Abschnittes (22) an der Schlaucheinführungsseite und der Hülse (4) definiert ist, wobei der Innenring durch Zusammenwirken der Laschen gegen die sich aufweitende Fläche in die Ruheposition zurückführbar ist.

6. Fitting nach Anspruch 5, bei welchem ein Übergangs-oder Verbindungsbereich (23) zwischen dem Abschnitt (21) an dem Rohreinführungsende und dem Abschnitt (22) an der der End- oder Stirn-Wand-Seite im Wesentlichen der Ruheposition P0 entspricht.

7. Fitting nach einem der vorhergehenden Ansprüche, bei welchem die Hülse (4) mindestens ein axiales Fenster (41), in einer axialen Position, die im Wesentlichen der Ruheposition P0 entspricht, aufweist.

8. Fitting nach Anspruch 7, bei welchem der Innenring (7) in der Ruheposition in einer axialen Position im Wesentlichen mit einer axialen Position von mindestens einem Fenster (41) in der Crimphülse ausgerichtet ist.

9. Fitting nach einem der vorhergehenden Ansprüche, bei welchem der Innenring (7) im Wesentlichen aus dielektrischem Material hergestellt ist.

## Revendications

1. Raccord, comprenant :
un corps de raccord (1) avec une paroi de fond (10) et un support interne (2) sur lequel une extrémité de tube (3) peut être insérée/emboitée,
une douille (4), qui entoure le support interne (2), afin de fixer l'extrémité de tube sur le support interne, la douille (4) comprenant au moins une lumière (41)
une bague interne (7), insérée sur le support interne, configurée pour être interposée entre la paroi de fond (10) et l'extrémité du tube (3), la bague interne (7) étant mobile entre une position de repos (PO) et une position de butée dans laquelle la bague interne est sensiblement en butée contre la paroi de fond du corps de raccord, et
des moyens de rappel (72 ; 2) de la bague interne vers la position de repos dans laquelle la bague interne (7) est visible à travers la au moins une lumière (41), les moyens de rappel étant au moins en partie formés par une pièce autre que la bague interne,
dans lequel le support interne (2) présente une partie (21) côté extrémité d'insertion de tube, avec une enveloppe circonférentielle externe (221) de diamètre sensiblement constant depuis l'extrémité d'insertion de tube vers une zone de jonction, et une partie (22) côté paroi de fond, avec une enveloppe circonférentielle externe (222), **caractérisé par** la partie (22) côté paroi de fond, avec une enveloppe circonférentielle externe (222) de diamètre sensiblement croissant en direction de la paroi de fond, le diamètre croissant depuis la zone de jonction (23) vers la paroi de fond (10).

2. Raccord selon la revendication 1, dans lequel la zone de jonction (23) entre la partie (21) côté extrémité d'insertion de tube et la partie (22) côté paroi de fond correspond sensiblement à la position de repos PO.

3. Raccord selon l'une des revendications 1 à 2, dans lequel la bague interne (7) comprend au moins une patte (72) sensiblement élastique en appui contre le support interne (2).

4. Raccord selon la revendication 3, dans lequel ladite au moins une patte (72) a une longueur radiale sensiblement égale à la distance radiale définie entre l'enveloppe circonférentielle externe (221) de la partie (22) côté extrémité d'insertion de tube et la douille (4).

5. Raccord, comprenant :
un corps de raccord (1) avec une paroi de fond (10) et un support interne (2) sur lequel une extrémité de tube (3) peut être insérée/emboitée,
une douille (4), qui entoure le support interne (2), afin de fixer l'extrémité de tube sur le support interne, la douille (4) comprenant au moins une lumière (41)
une bague interne (7), insérée sur le support interne, configurée pour être interposée entre la paroi de fond (10) et l'extrémité du tube (3), la bague interne (7) étant mobile entre une position de repos (PO) et une position de butée dans laquelle la bague interne est sensiblement en butée contre la paroi de fond du corps de raccord, et
des moyens de rappel (72 ; 2) de la bague interne vers la position de repos dans laquelle la bague interne (7) est visible à travers la au moins une lumière (41), les moyens de rappel étant au moins en partie formés par une pièce autre que la bague interne,
dans lequel le support interne (2) présente une partie (21) côté extrémité d'insertion de tube, avec une enveloppe circonférentielle externe (221) de diamètre sensiblement constant depuis l'extrémité d'insertion de tube vers une zone de jonction, et une partie (22) côté paroi de fond, avec une enveloppe circonférentielle externe (222)
**caractérisé par** la partie (22) côté paroi de fond avec une enveloppe circonférentielle externe (222) de diamètre sensiblement croissant en direction de la paroi de fond, ladite partie avec l'enveloppe circonférentielle externe (222) de diamètre croissant en direction de la paroi de fond formant une surface évasée, et dans lequel
la bague interne (7) comprend au moins une patte (72) sensiblement élastique en appui contre le support interne (2), dans lequel ladite au moins une patte (72) a une longueur radiale sensiblement égale à la distance radiale définie entre l'enveloppe circonférentielle externe (221) de la partie (22) côté extrémité d'insertion de tube et la douille (4), la bague interne (pouvant être rétablie dans la position de repos par la coopération des pattes contre la surface évasée.

6. Raccord selon la revendication 5, dans lequel une zone de jonction (23) entre la partie (21) côté extrémité d'insertion de tube et la partie (22) côté paroi de fond correspond sensiblement à la position de repos PO.

7. Raccord selon l'une quelconque des revendications précédentes, dans lequel la douille (4) est munie d'au moins une lumière (41) axiale, à une position axiale correspondant sensiblement à la position de repos PO.

8. Raccord selon la revendication 7, dans lequel la bague interne (7), dans la position de repos, est dans une position axiale sensiblement alignée avec une position axiale d'au moins une lumière (41) de la douille de sertissage.

9. Raccord selon l'une des revendications précédentes, dans lequel la bague interne (7) est sensiblement en matériau diélectrique.
